# EUROPÄISCHE PATENTSCHRIFT

(11) **EP 3 685 340 B1**
(45) Veröffentlichungstag und Bekanntmachung des Hinweises auf die Patenterteilung: **16.09.2026**
(21) Anmeldenummer: 18803375.7
(22) Anmeldetag: 08.11.2018
(51) Int. Cl.: G06Q 50/04

(54) **VERFAHREN UND VORRICHTUNG ZUM BEREITSTELLEN EINER WERKSTÜCKDARSTELLUNG AN EINEM FERTIGUNGSPLATZ**
METHOD AND APPARATUS FOR PROVIDING A REPRESENTATION OF A WORKPIECE AT A MANUFACTURING LOCATION
PROCÉDÉ ET APPAREIL POUR FOURNIR UNE REPRÉSENTATION D'UNE PIÈCE À USINER À UNE PLACE DE FABRICATION

(30) Priorität: 10.11.2017 DE 102017126389
(43) Veröffentlichungstag der Anmeldung: 29.07.2020
(73) Patentinhaber: Liebherr-Werk Biberach GmbH, 88400 Biberach an der Riss (DE)
(72) Erfinder: BRAMBERGER, Robert, 82293 Mittelstetten/Vogach (DE)
(74) Vertreter: Lorenz Seidler Gossel Part. mbB
(86) Internationale Anmeldenummer: PCT/EP2018/080639
(87) Internationale Veröffentlichungsnummer: WO 2019/092117

(56) Entgegenhaltungen:
- CN-B- 103 473 274
- US-A1- 2010 302 242
- US-A1- 2016 171 360

## Beschreibung

Die vorliegende Erfindung betrifft ein Verfahren sowie eine Vorrichtung zum Bereitstellen einer Werkstückdarstellung an einem Fertigungsplatz, wobei in zumindest einer Datenbank ein Datensatz zum Bereitstellen eines Originalmodells des Werkstücks gespeichert wird und auf einer Anzeigeeinheit eines Endgeräts am Fertigungsplatz die Werkstückdarstellung mit Hilfe gespeicherter Modelldaten angezeigt wird.

In Fertigungsbetrieben werden an den Fertigungsplätzen benötigte Werkstückdarstellungen trotz zunehmendem Einzug von elektronischer Datenverarbeitung immer noch oft in Form von Papierzeichnungen verwendet, die beim Erstellen bzw. Freigeben des Fertigungsauftrags oft ausgedruckt und dem Maschinenführer übergeben werden. Um dem Werker die notwendigen Informationen über das zu fertigende Werkstück klar und deutlich zu veranschaulichen, werden solche Zeichnungen oft sehr großformatig ausdruckt, um verschiedene Seiten- und Schnittansichten ausreichend groß darstellen zu können. Dabei kann ein zu fertigendes "Werkstück" nicht nur ein Einzelteil, sondern auch eine Baugruppe mit mehreren Einzelteilen sein, die ggf. zusammenzufügen sind, so dass die Werkstückdarstellung noch komplexer wird. Solche Fertigungszeichnungen aus Papier sind dabei nicht nur unpraktisch zu handhaben und auch bei großem Format begrenzt in der Anschaulichkeit, sondern auch schwierig unter Verschluss zu halten, da sie oft achtlos am Fertigungsplatz liegengelassen werden.

Im Sinne einer papierlosen Fabrik wurde deshalb auch bereits vorgeschlagen, an Fertigungsplätzen großformatige Bildschirme aufzustellen, auf denen Fertigungszeichnungen elektronisch angezeigt werden können. Solche Bildschirme beispielsweise in Form von LCD-Monitoren werden beispielsweise an NCgesteuerten Bearbeitungszentren wie Fräsmaschinen, Drehmaschinen oder anderen spanenden oder spanlosen Werkzeugmaschinen eingesetzt. Bei komplexeren Werkstücken ist eine solche Visualisierung jedoch bisweilen nicht ausreichend, um dem Werker das Werkstück plastisch zu veranschaulichen. Beispielsweise ist dies der Fall, wenn räumlich anspruchsvolle Werkstücke mit beispielsweise in verschiedenen Ebenen verschnittenen Konturen zu fertigen sind, beispielsweise ein komplexes Stabwerk mit Schweißnähten in verschiedenen Konturebenen zu verschweißen ist. Zusätzliche Unzulänglichkeiten können sich auch ergeben, wenn an einem Fertigungsplatz verschiedene Werker zugange sind oder ein Werkstück von einem Werker in einer sich bewegenden Fertigungsstraße mitlaufend zu bearbeiten ist, so dass die Werkstückdarstellung auf einem fest installierten Bildschirm nicht immer passend für den jeweiligen Blickwinkel angezeigt wird. Auch wenn Großbildschirme verwendet werden, kann ein kontinuierliches Hin- und Herwenden der Blickrichtung zwischen Bildschirm und Werkstück ermüdend sein.

Gleichzeitig stellt sich bei solchen elektronischen Darstellungen der Fertigungszeichnungen die Problematik, wie eine ggf. noch nicht eingespielte Darstellung von einem am jeweiligen Fertigungsplatz beschäftigten Mitarbeiter aufgerufen bzw. heruntergeladen werden kann. Einerseits sind die jeweiligen Mitarbeiter bisweilen nicht mit den Details des IT-Systems vertraut, auch wenn sie hochqualifiziert im Umgang mit "ihrer" Werkzeugmaschine und deren Computersteuerung sind. Zum anderen stellt sich die Frage der Berechtigung, da eine jeweils benötigte Zeichnung nur einem hierfür berechtigten Mitarbeiter angezeigt werden soll.

Die Anzeige von Bilddarstellungen eines zu fertigenden Produkts auf einem Werkerbildschirm zeigt beispielsweise die Schrift EP 0 425 408 A2.

Dieser Ansatz zur "papierlosen Fabrik" ist in weiteren Druckschriften in diversen Facetten verfeinert. Beispielsweise zeigt die DE 10 2015 103 853 A1 das Bereitstellen von 3D-Darstellungen von spanenden Werkzeugmaschinen über ein Nutzerportal. Die Schrift DE 10 2008 003 731 zeigt das Speichern von 3D-Modellen in einer Datenbank sowie das Bereitstellen der 3D-Modelle zusammen mit Hilfsfiguren für einen Monteur, wobei der Zugriff auf die Datenbank über ein Intranet erfolgen soll. Ähnliche Systeme, die einem Werker 3D-Modelle elektronisch anzeigen, sind aus den Schriften WO 2008/095574 A2 und EP 2 980 736 A1 bekannt.

Ferner zeigt die Schrift WO 2015/025012 A das Bereitstellen einer Montageanleitung für Werkzeugmaschinen auf einem Bildschirm, wobei solche Montageanleitungen auch Multimediadateien und 3D-Modelle von Maschinenteilen enthalten sollen.

Ferner zeigt die Schrift US 2010/0302242 A1 ein CAD-System, das es erlaubt, verschiedene Elemente eines graphischen Modells als wichtig und unwichtig zu kalssifizieren und die Darstellung auf dem Bildschirm anhand der Klassifizierung zu verändern, nämlich dahingehend, dass wichtige Elemente hervorgehoben und unwichtige Elemente blasser dargestellt werden. Die Schrift US 2016/0171360 A1 zeigt ferner ein Werkzeugmaschinensystem, bei dem auf der Werkzeugmaschine verschiedene Strich- oder QR-Codes angebracht sind, die von einem Lesegerät der Werkzeugmaschine einlesbar sind, um auf einem Display der Maschine Betriebs- bzw. Montageanleitungen anzuzeigen, wobei die anzuzeigenden Daten aus einer Datenbank abgefragt werden.

Der vorliegenden Erfindung liegt hiervon ausgehend die Aufgabe zugrunde, ein verbessertes Verfahren sowie eine verbesserte Vorrichtung zum Bereitstellen von Werkstückdarstellungen an einem Fertigungsplatz zu schaffen, die Nachteile des Standes der Technik vermeiden und Letzteren in vorteilhafter Weise weiterbilden. Insbesondere soll an jedem Fertigungsplatz jedem autorisierten Mitarbeiter eine anschauliche Visualisierung des zu fertigenden Werkstücks in einfacher Weise bereitgestellt werden, ohne dass der Mitarbeiter hierzu vertiefte IT-Kenntnisse benötigt, hohe Datenvolumina übertragen werden müssten oder die Datensicherheit geopfert werden würde.

Ein Verfahren zum Bereitstellen einer Werkstückdarstellung an einem Fertigungsplatz aus dem Stand der Technik ist aus CN 103473274 B bekannt.

Erfindungsgemäß wird die genannte Aufgabe durch ein Verfahren gemäß Anspruch 1 sowie eine Vorrichtung gemäß Anspruch 7 gelöst. Bevorzugte Ausgestaltungen der Erfindung sind Gegenstand der abhängigen Ansprüche.

Es wird also vorgeschlagen, zusätzlich zu einem ersten Datensatz, der zum Darstellen eines Originalmodells des Werkstücks beispielsweise auf einem CAD-System ausgebildet ist und in einer Datenbank gespeichert wird, einen zweiten Datensatz, der gegenüber dem genannten ersten Datensatz vereinfacht ist und zum Darstellen eines vereinfachten Modells des Werkstücks ausgebildet ist, zu generieren und in der genannten Datenbank, in der der genannte erste Datensatz gespeichert wird, oder in einer anderen Datenbank zu speichern, wobei an dem Fertigungsplatz zunächst nur ein Code zum Identifizieren des zu fertigenden Werkstücks bereitgestellt wird, welcher Code an einem Endgerät eingelesen werden kann, so dass das genannte Endgerät anhand des Codes den zweiten, vereinfachten Datensatz aus der Datenbank abrufen und anhand des an das Endgerät übermittelten zweiten, vereinfachten Datensatzes das vereinfachte Werkstückmodell auf einer Anzeigeeinheit anzeigen kann.

Durch die Generierung und Verwendung eines "abgespeckten" Werkstückmodells können nicht nur die zu übertragenden Datenvolumina und die am Endgerät benötigten Rechenleistungen reduziert und ggf. auch ein komplexes CAD-Softwaremodul am Endgerät zur Darstellung eingespart werden, sondern auch für den Werker überflüssige Informationen und Ansichten weggelassen werden, um die Anschaulichkeit der Werkstückdarstellung am Fertigungsplatz zu erhöhen. Gleichzeitig bleibt die Handhabung für den jeweiligen Werker am Fertigungsplatz einfach, da am Endgerät lediglich der übermittelte Code eingelesen bzw. eingegeben werden muss, woraufhin das Endgerät vorzugsweise automatisch oder halbautomatisch das Übermitteln der Modelldaten zum Anzeigen des Werkstückmodells an der Anzeigeeinheit des Endgeräts initiiert, so dass ein jeweiliger Werker keine vertieften IT-Kenntnisse haben muss, um die Werkstückdarstellung anzeigen zu können. Trotz einer solchermaßen einfachen Handhabung kann ein unkontrolliertes Abzweigen oder Umleiten der Werkstückdaten vermieden werden, da das Endgerät, an dem der Code eingelesen bzw. eingegeben wird, dazu konfiguriert sein muss, beispielsweise in Form eines entsprechend ausgebildeten und eingespielten Softwarebausteins, anhand des eingelesenen Codes mit der richtigen Datenbank bzw. einen daran angeschlossenen Server in der benötigten, vorbestimmten Weise zu kommunizieren. Für Außenstehende ist der übermittelte Code per se wertlos, da der Code ohne ein passend konfiguriertes Endgerät und/oder ohne passende Userkennung nicht weiter verwendbar ist.

In vorteilhafter Weiterbildung der Erfindung kann der zweite vereinfachte Datensatz ein standardisiertes, mit diversen Endgeräten kompatibles Datenformat aufweisen, das es erlaubt, das vereinfachte Werkstückmodell auch ohne Vorhandensein eines CAD-Programms am Endgerät anzuzeigen. Beispielsweise kann der vereinfachte Datensatz in Form eines Stepfiles ausgebildet sein, das am Endgerät durch eine dort implementierte Standard-App in Form eines Step Viewers bzw. STP-Viewers angezeigt werden kann. Im Gegensatz zu dem vereinfachten zweiten Datensatz, der an das Endgerät übermittelt wird, kann der erste Datensatz zum Darstellen des Originalmodells ein anderes Datenformat aufweisen, insbesondere in Form eines CAD-Files, das mit einem zugehörigen CAD-Programm verwendbar ist.

Insbesondere kann der genannte zweite, vereinfachte Datensatz zum Darstellen eines dreidimensionalen Werkstückmodells konfiguriert sein, um auch am Endgerät am Fertigungsplatz eine plastische, anschauliche Werkstückdarstellung in Form eines 3D-Modells anzeigen zu können. Vorteilhafterweise ist die hierzu am Endgerät implementierte Visualisierungssoftware dazu ausgebildet, die Ansicht bzw. Blickrichtung des 3D-Modells drehen bzw. wenden, insbesondere um mehrere Raumachsen verkippen zu können, um dem Werker die gewünschte Ansicht bieten zu können.

Der umfangreichere, andersformatige erste Datensatz sowie der vereinfachte zweite Datensatz können vorteilhafterweise gemeinsam in einer Datenbank abgelegt sein, wobei die beiden Datensätze miteinander verknüpft und/oder ineinandergeschachtelt abgelegt sein können. Beispielsweise kann der vereinfachte zweite Datensatz als Anhang zum ersten komplexeren Datensatz abgespeichert werden. Alternativ oder zusätzlich kann der zweite reduzierte Datensatz als Teil des ersten, komplexeren Datensatzes in der Datenbank gespeichert sein.

Alternativ ist es grundsätzlich aber auch möglich, die genannten ersten und zweiten Datensätze in verschiedenen Datenbanken abzuspeichern.

Die Generierung des zweiten, vereinfachten Datensatzes kann hierbei grundsätzlich in verschiedener Weise erfolgen. Gemäß einer ersten Ausführungsform kann die Generierung des zweiten vereinfachten Datensatzes in die Erstellung des ersten Datensatzes integriert werden, insbesondere automatisiert beim Anlegen des Werkstücks und/oder beim Erstellen des Originalmodells des Werkstücks generiert werden. Insbesondere kann der vereinfachte Datensatz automatisiert beim Erstellen der CAD-Zeichnung des Werkstücks aus den dabei generierten CAD-Daten abgeleitet werden.

Alternativ ist es gemäß einer anderen Ausführungsform jedoch ebenfalls möglich, die Modelldaten des zweiten Datensatzes extern zu erstellen und hierzu nicht das CAD-Programm für die Erstellung des Originalmodells, sondern ein externes Softwaretool zu verwenden. Ein solchermaßen extern erstellter zweiter Datensatz kann gleichwohl zusammen mit dem ersten, komplexeren Datensatz gemeinsam in einer Datenbank abgespeichert, beispielsweise in der vorgenannten Weise als Anhang zum ersten Datensatz abgelegt werden.

Um den Zugriff auf die Werkstückdaten besser kontrollieren zu können, wird gemäß der Erfindung der an den Fertigungsplatz übermittelte Code an dem Endgerät mittels einer Decodiereinrichtung decodiert und aus dem Code eine Modellidentifikation generiert, die von dem Endgerät zum Abfragen der Werkstückmodelldaten an die Datenbank und/oder einen mit der genannten Datenbank verbundenen Server übermittelt wird, woraufhin die Datenbank bzw. der genannte Server unter Verarbeitung der Modellidentifikation den zu dem jeweiligen Werkstück gehörigen zweiten Datensatz bereitstellen kann. Es wird also vorteilhafterweise nicht direkt der am Endgerät eingelesene bzw. eingegebene Code an die Datenbank übermittelt, sondern eine aus dem eingelesenen bzw. eingegebenen Code generierte, digital verarbeitbare Modell-ID, die dann von der Datenbank bzw. dem damit verbundenen Server weiterverarbeitet werden kann. Hierdurch kann verhindert werden, dass mittels allgemeiner, nicht entsprechend konfigurierter Endgeräte anhand des Codes allein auf die Datenbank zugegriffen werden kann. Nur wenn das Endgerät über die entsprechende Decodiereinrichtung verfügt bzw. darauf Zugriff hat, kann das Endgerät mit dem Code etwas anfangen und mit der decodierten Modell-ID die benötigten Modelldaten abfragen.

Erfindungsgemäß kann die Decodiereinrichtung, die beispielsweise direkt am Endgerät in Form eines Decodier-Softwarebausteins implementiert sein kann, nicht nur in der genannten Weise die Modell-ID decodieren, sondern aus dem eingelesenen bzw. eingegebenen Code auch eine Information über die abzufragende Datenbank bzw. den abzufragenden Server gewinnen. Erfindungsgemäß kann die genannte Decodiereinrichtung dazu konfiguriert sein, aus dem übermittelten Code eine Netzwerk-Adresse beispielsweise in Form einer Server-ID oder einer Datenbank-ID zu decodieren, anhand derer dann das Endgerät die Abfrage der Modelldaten an die "richtige" Datenbank bzw. den "richtigen" Server richten kann.

Zusätzlich zu einem direkt am Endgerät implementierten Decodier-Softwarebausteins kann das Endgerät auch dazu konfiguriert sein, mit einer externen Decodiereinrichtung zu kommunizieren, um den eingegebenen bzw. eingelesenen Code in der genannten Weise zu decodieren.

Um die Datensicherheit weiter zu erhöhen, übermittelt das Endgerät die decodierte Modell-ID zusammen mit einer Endgeräte- und User-Identifikation an die Datenbank und/oder den damit verbundenen Server, wobei von einer Authentifizierungseinrichtung, die mit der Datenbank und/oder dem Server verbindbar ist, die Berechtigung des anfragenden Endgeräts und/oder anfragenden Users zum Abfragen der gewünschten Modelldaten anhand der übermittelten Modell-ID und der übermittelten Endgeräte- und/oder User-ID überprüft wird. In Abhängigkeit der genannten Berechtigungsprüfung können die Modelldaten dann an das Endgerät übermittelt oder eben nicht übermittelt werden.

Die genannte Endgeräte-Identifikation kann dabei ein das Endgerät per se identifizierender Code sein, während die genannte User-ID beispielsweise ein Passwort eines bestimmten Werkers sein kann. Durch Überprüfen der genannten Endgeräte- und/oder User-ID kann vor Übermittelung der Werkstückdaten an das Endgerät überprüft werden, ob das anfragende Endgerät und/oder der das Endgerät benutzende User tatsächlich hierzu autorisiert sind.

Die genannte Authentifizierungseinrichtung kann hierzu beispielsweise eine vorkonfigurierte Liste von berechtigten Endgeräte-IDs und/oder berechtigten User-IDs abspeichern, um die bei einer Anfrage übermittelte Endgeräte-ID und/oder User-ID mit der gespeicherten Liste abzugleichen. Um hierbei die Sicherheit weiter zu erhöhen, kann die genannte Authentifizierungseinrichtung auch mit einer Ver- und/oder Entschlüsselungseinrichtung arbeiten, die die übermittelte und/oder die gespeicherte Endgeräte-ID und/oder User-ID bei oder vor dem Vergleichen entschlüsselt bzw. verschlüsselt. Eine solche Ver- und/oder Entschlüsselungseinrichtung kann beispielsweise ein Hash-Modul zum Bereitstellen einer kryptografischen Hash-Funktion aufweisen, wobei ein solches Hash-Modul vorteilhafterweise schlüsselabhängig arbeitend ausgebildet sein und ein Schlüsselerzeugungsmodul zum Erzeugen eines Schlüssels für die kryptografische Hash-Funktion aufweisen kann.

Der genannte Code, der an den Fertigungsplatz übermittelt wird, kann beispielsweise ein QR-Code sein, d.h. ein Quick Response-Code wie er in Form eines zweidimensionalen Codes von der japanischen Fa. Denso Wave in den 90er-Jahren entwickelt wurde. Alternativ oder zusätzlich können aber auch andere Codes beispielsweise in Form eines Strichcodes oder eines Zahlen- und/oder Buchstabencodes Verwendung finden.

Je nach Ausbildung des Codes kann das Endgerät verschieden ausgebildete Code-Leseeinheiten aufweisen, beispielsweise eine visuelle Code-Erfassungseinheit wie einen QR-Code-Leser oder einen Strichcodeleser. Alternativ oder zusätzlich kann das Endgerät Eingabemittel beispielsweise in Form eines Touchscreens zum Eingeben eines Zahlen- und/oder Buchstabencodes aufweisen.

Vorteilhafterweise kann das Endgerät und/oder dessen Anzeigeeinheit als mobiles Bildschirmgerät ausgebildet sein, das von einem Werker in der Hand gehalten werden kann. Beispielsweise kann das Endgerät in Form eines Tablet-Computers ausgebildet sein. Alternativ oder zusätzlich kann das Endgerät ein Mobiltelefon mit ausreichend großem Bildschirm umfassen, auf dem die Werkstückdarstellung in der beschriebenen Weise angezeigt werden kann.

Alternativ oder zusätzlich kann das Endgerät auch mehrere separate Komponenten umfassen, wobei diese separaten Komponenten miteinander vorzugsweise drahtlos kommunizieren können. Beispielsweise kann das Endgerät eine separate Eingabe- und/oder Einlesevorrichtung zum Eingeben bzw. Einlesen des Codes aufweisen, beispielsweise in Form eines Code-Einlesekopfes, der tragbar ausgebildet sein kann. Zusätzlich zu einer solchen separaten Eingabe- bzw. Einlesevorrichtung kann das Endgerät die genannte Anzeigeeinheit aufweisen, die der Werker separat mit sich führen oder auch fest am Fertigungsplatz installieren kann.

Vorteilhafterweise kann das Endgerät auch mehrere Anzeigeeinheiten umfassen, beispielsweise eine tragbare Anzeigeeinheit vorzugsweise in Form eines Tablet-Computers und eine fest installierbare Anzeigeeinheit beispielsweise in Form eines Großbildschirms.

Alternativ oder zusätzlich kann das Endgerät auch eine bestimmungsgemäß am Körper tragbare Anzeigeeinheit beispielsweise in Form einer Datenbrille umfassen, auf der die Werkstückdarstellung im Sinne einer Augmented Reality anzeigbar ist, so dass der Werker parallel das tatsächlich zu fertigende Werkstück bzw. dessen Bauteile einerseits und andererseits das eingeblendete Werkstückmodell sehen kann. Alternativ oder zusätzlich zu einer solchen Datenbrille kann eine am Körper tragbare Anzeigeeinheit auch an einem Kleidungsstück des Werkers befestigt, beispielsweise am Stoff eines Ärmels angebracht sein. Alternativ oder zusätzlich kann auch eine mit einem Armband am Handgelenk befestigbare Anzeigeeinheit im Sinne einer Smartwatch mit ausreichend großem Bildschirm Verwendung finden.

Der zuvor genannte Code, durch dessen Eingabe bzw. Einlesen die Werkstückdarstellung auf der Anzeigeeinheit des Endgeräts generierbar ist, kann dabei in verschiedener Form an den Werker bzw. den Fertigungsplatz gegeben werden. Beispielsweise kann der genannte Code auf den Arbeitspapieren eines Fertigungsauftrags ausgedruckt werden und dem Werker physisch übergeben werden.

Alternativ oder zusätzlich kann der Code auch auf einem zu verarbeitenden Werkstück angebracht sein, das an den Fertigungsplatz angeliefert wird, beispielsweise in Form eines auf dem Werkstück oder dessen Verpackung angebrachten Code-Aufklebers oder eines elektronischen und/oder magnetischen Code-Tags wie RFID-Tag oder RuBee-Tag. Ein solcher mit dem Werkstück verbundener Code erlaubt es dem Werker, nicht nur in einfacher Weise das Werkstück per se zu identifizieren, sondern gibt ihm auch die Bearbeitungs- und/oder Einbauinformationen in Form der Werkstückdarstellung an die Hand. Wird beispielsweise eine Strebe eines zu erstellenden Fachwerks an einem Schweißplatz angeliefert, kann durch Einlesen des daran angebrachten Codes die zugehörige Werkstückdarstellung aufgerufen werden, anhand derer der Schweißer dann die Strebe an der passenden Stelle des Fachwerks in der bestimmungsgemäßen Ausrichtung einschweißen kann.

Alternativ oder zusätzlich wäre es auch möglich, den Code in elektronischer Form an den Fertigungsplatz zu übermitteln, beispielsweise dort auf einem fest installierten Bildschirm anzuzeigen, so dass er am mobilen Endgerät des Werkers eingegeben oder eingelesen werden kann.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung eines Fertigungsplatzes zum Fertigen eines Werkstücks sowie einer Vorrichtung zum Bereitstellen einer Werkstückdarstellung an diesem Fertigungsplatz, die mehrere Anzeigeeinheiten in Form eines am Fertigungsplatz aufgestellten Bildschirms, einer tragbaren Anzeige- bzw. Bildschirmbrille und eines tragbaren Tablet-Computers umfasst, auf denen die Werkstückdarstellung anzeigbar ist,
- Fig. 2:: eine schematische Darstellung des Einscannens eines am zu verarbeitenden Werkstück angebrachten Codes über die Codeleseeinrichtung der zuvor genannten Datenbrille, und
- Fig. 3:: eine schematische Darstellung der Datenstruktur des Servers der Vorrichtung und der Datenübermittlung zwischen Server und Endgerät.

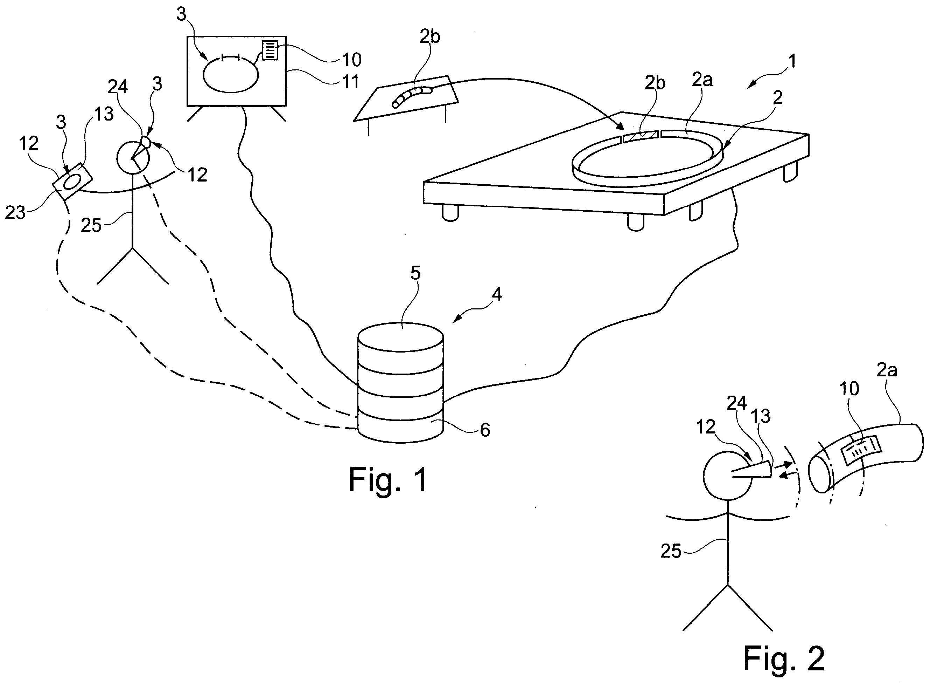

Wie Fig. 1 zeigt, kann ein Fertigungsplatz 1 ein Montageplatz mit einer Schweißeinrichtung sein, um ein Werkstück 2 aus verschiedenen Werkstückteilen 2a und 2b zusammenzufügen und miteinander zu verschweißen. Im gezeigten Beispiel wird hierbei ein kranzförmiges Bauteil gefügt. Es versteht sich jedoch, dass der Fertigungsplatz 1 auch andere Werkzeugmaschinen zur spanenden oder spanlosen Fertigung von Werkstücken umfassen kann, beispielsweise Fräsmaschinen, Drehmaschinen oder andere Bearbeitungszentren.

Um an dem Fertigungsplatz 1 Werkstückdarstellungen 3 im Sinne von Fertigungszeichnungen bereitstellen zu können, umfasst die hierfür vorgesehen Vorrichtung 4 eine Datenbank 5, die Teil eines Servers 6 des Fertigungsbetriebes oder mit einem solchen Server 6 verbunden sein kann.

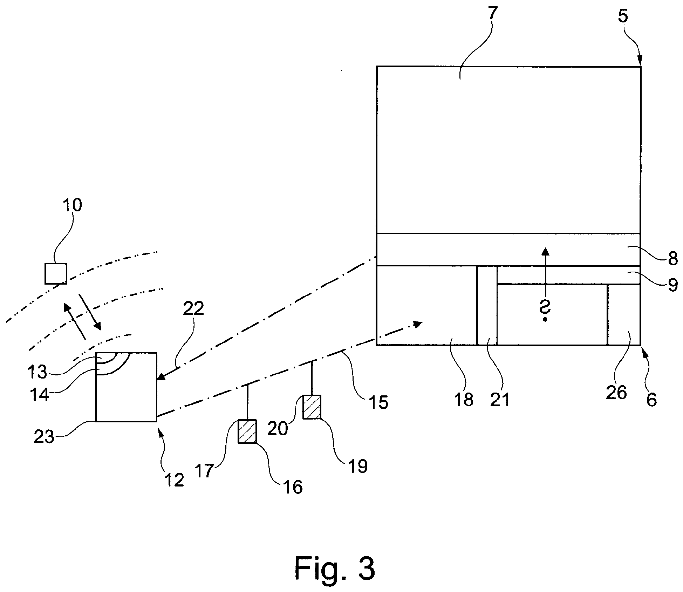

Wie Fig. 3 zeigt, können in der Datenbank 5 des Servers 6 Datensätze 7 zu den zu fertigenden Werkstücken abgelegt sein, wobei ein solcher Datensatz 7 insbesondere ein CAD-Datensatz sein kann, der mit einem CAD-System beim Konstruieren des Werkstücks erstellt wurde und zum Darstellen eines Originalmodells, insbesondere eines 3D-CAD-Modells des Werkstücks dienen kann.

Zusätzlich zu einem solchen vollständigen, umfangreicheren Datensatz 7 kann in dem Server 6 bzw. dessen Datenbank 5 ein zweiter, reduzierter Datensatz 8 gespeichert werden, der zur Darstellung eines vereinfachten, vorzugsweise aber immer noch dreidimensionalen Modells des Werkstücks 2 dient, wobei dieser zweite, reduzierte Datensatz 8 im Vergleich zum vollständigen CAD-Datensatz 7 ein verringertes Datenvolumen und/oder ein anderes Datenformat aufweisen kann.

Wie eingangs bereits beschrieben, kann ein solcher zweiter reduzierter Datensatz 8 automatisiert beim Erstellen des vollständigen ersten Datensatzes 7 generiert, beispielsweise aus den CAD-Daten abgeleitet werden, beispielsweise indem für die Fertigung per se nicht notwendige Daten weggelassen werden. Alternativ kann ein solcher zweiter vereinfachter Datensatz 8 aber auch mit einem externen Tool separat von den CAD-Daten generiert und anschließend zu dem vollständigen Datensatz 7 hinzugespeichert werden, beispielsweise als Anhang zu dem ersten Datensatz 7, vgl. Fig. 3. Grundsätzlich ist eine Abspeicherung des zweiten vereinfachten Datensatzes 8 als Teil des oder als Anhang zu dem ersten Datensatz 7 unabhängig von der Generierung des zweiten Datensatzes möglich.

Um den Zugriff auf die in der Datenbank 5 gespeicherten Modelldaten zu steuern, umfasst die Vorrichtung 4 ferner einen Code-Generator 9, der für ein jeweiliges Werkstück 2 bzw. den zugehörigen Datensatz 8 einen Code 10 generiert, der in der Datenbank 5 mit dem Datensatz 8 verknüpft oder auch in einer separaten Speichereinrichtung unmittelbar als solcher oder auch in verschlüsselter Form gespeichert werden kann.

Der genannte Code-Generator 9 kann als Code 10 insbesondere einen sog. QR-Code generieren, der als Information die Werkstück-ID und ggf. auch den Speicherplatz des zugehörigen Datensatzes 8 beinhalten kann.

Der besagte Code 10 wird von der Vorrichtung 4 an den Fertigungsplatz 1 übermittelt und/oder einem mit der Fertigung des Werkstücks 2 beauftragten Werker bereitgestellt, beispielsweise indem der genannte QR-Code auf den Auftragspapieren ausgedruckt wird. Alternativ oder zusätzlich kann der genannte Code 10 aber auch elektronisch an den Fertigungsplatz 1 übertragen und dort auf einem aufgestellten Bildschirm oder einer anderen Anzeigevorrichtung 11 angezeigt werden, vgl. Fig. 1. Alternativ oder zusätzlich kann der Code 10 auch an einem Werkstück 2 bzw. einem Bauteil des zu fertigenden Werkstücks 2a angebracht werden, beispielsweise in Form eines Code-Aufklebers oder - je nach Code - mittels eines am Werkstück angebrachten Datenspeichers beispielsweise in Form eines RFID-Tags oder eines sog. RuBee-Tags.

Um den zu einem Werkstück 2 bzw. dessen Darstellung gehörigen Code 10 eingeben bzw. einlesen zu können, kann ein Endgerät 12, das vorteilhafterweise ein elektronisches Datenverarbeitungsgerät mit einem Prozessor und einem Arbeitsspeicher und ggf. weiteren, per se bekannten Datenverarbeitungsbausteinen sein kann, eine Eingabe- und/oder Einlesevorrichtung 13 aufweisen, beispielsweise in Form eines Bildsensors, der den genannten QR-Code einlesen und verarbeiten kann.

Insbesondere kann das genannte Endgerät 12 eine Decodiereinrichtung 14 umfassen, mittels derer der eingegebene bzw. eingelesene Code 10 decodiert werden kann, um daraus eine Werkstück- bzw. Modell-ID und ggf. auch eine Datenbank-ID zu gewinnen. Mittels der genannten Modell-ID und der genannten Datenbank-ID kann das Endgerät 12 eine Anfrage an den Server 6 bzw. die "richtige" Datenbank 5 gestellt werden, um dort die zu der genannten Modell-ID gehörigen Daten auszulesen bzw. anzufordern.

Wie Fig. 3 zeigt, kann die Anfrage 15 des Endgeräts 12 an den Server 6, die die genannte Modell-ID 16 und Datenbanken-ID 17 enthalten kann, beispielsweise drahtlos über ein Intranet oder eine andere Kommunikationsverbindung an eine Authentifizierungseinrichtung 18 des Servers 6 übermittelt werden, die die Berechtigung der Anfrage bzw. des Anfragenden prüft. Hierzu kann die genannte Anfrage 15 vorteilhafterweise auch eine Endgeräte-ID 19 und/oder eine User-ID in Form eines Passworts 20 enthalten, anhand derer die Authentifizierungseinrichtung 18 die Berechtigung prüfen kann. Die genannte Authentifizierungseinrichtung 18 kann hierzu beispielsweise eine Verschlüsselungseinrichtung 21 umfassen, die beispielsweise ein Hash-Modul aufweisen kann, wie eingangs schon genannt.

Ist der Anfragende berechtigt, übermittelt der Server 6 den zweiten reduzierten Datensatz 8, der zum Darstellen eines 3D-Modells für das mit der Werkstück-ID 16 gekennzeichnete Werkstück 2 bestimmt ist, an das Endgerät 12, wobei diese Datenübermittlung 22 ebenfalls drahtlos über WLAN bzw. ein Intranet des Fertigungsbetriebs erfolgen kann.

Das Endgerät 12 kann anhand der übermittelten Modelldaten, d.h. dem zweiten Datensatz 8 eine Darstellung des 3D-Modells des Werkstücks 2 auf einer mit dem Endgerät 12 verbindbaren Anzeigeeinheit bewerkstelligen. Dies kann die schon genannte Anzeigevorrichtung 11 am Fertigungsplatz 1 sein. Vorteilhafterweise kann das Endgerät 12 aber auch einen Tablet-Computer 23 mit einem Touchscreen umfassen, auf dem das 3D-Modell des Werkstücks darstellbar ist. Vorteilhafterweise kann der Visualisierungsbaustein des Endgeräts 12, der in Form eines Software-Bausteins beispielsweise an besagtem Tablet-Computer 23 implementiert sein kann, ein Drehen und Wenden des 3D-Modells auf der Anzeigeeinrichtung zulassen, wobei vorteilhafterweise das genannte Touchscreen des Tablets 23 die Steuerung erlauben kann.

Alternativ oder zusätzlich zu einem solchen Tablet 23 kann das Endgerät 12 aber auch eine Datenbrille 24 umfassen, die der Werker 25 am Kopf trägt und die Anzeige des Werkstückmodells in die Brille einblendet, um dem Werker 25 im Sinne einer Augmented Reality das Werkstückmodell einzublenden.

Wie die Figuren 1 und 2 zeigen, kann das zuvor erläuterte Einlesen des Codes 10 in verschiedener Weise erfolgen. Beispielsweise kann der Tablet-Computer 23 und/oder die Datenbrille 24 die zuvor genannte Einlesevorrichtung 13 des Endgeräts 12 umfassen, um beispielsweise den auf der Anzeigevorrichtung 11 angezeigten Code 10, vgl. Fig. 1, oder den direkt auf dem Werkstück 2 aufgebrachten Code 10 einlesen zu können, vgl. Fig. 2.

## Patentansprüche

1. Verfahren zum Bereitstellen einer Werkstückdarstellung (3) an einem Fertigungsplatz (1), mit folgenden Schritten:
Speichern eines ersten Datensatzes (7) zum Darstellen eines Originalmodells des Werkstücks (2) in einer Datenbank (5),
Generieren eines zweiten, gegenüber dem ersten Datensatz (7) vereinfachten Datensatzes (8) zum Darstellen eines vereinfachten Modells des Werkstücks (2) und Speichern des zweiten vereinfachten Datensatzes (8) in der oder einer anderen Datenbank (5), wobei der zweite Datensatz (8) im Vergleich zum ersten Datensatz (7) ein verringertes Datenvolumen und/oder ein anderes Datenformat aufweist,
Bereitstellen eines Codes (10) zum Identifizieren des an dem Fertigungsplatz (1) zu fertigenden Werkstücks (2), wobei der Code (10) in Form eines Code-Aufklebers oder Datenspeichers an dem Werkstück (2) angebracht ist, Einlesen des am Werkstück (2) angebrachten Codes (10) durch eine Einlesevorrichtung (13) eines Endgeräts (12),
Decodieren des eingelesenen Codes (10) mittels einer am Endgerät (12) vorgesehenen Decodiereinrichtung (14), wobei beim Decodieren aus dem eingelesenen Code (10) eine Modell-ID (16) und eine Datenbank-ID (17), die die Datenbank identifiziert, in der der zu der Modell-ID (16) zugehörige Datensatz gespeichert ist, generiert wird,
Abrufen des zweiten vereinfachten Datensatzes (8) durch das Endgerät (12) aus der Datenbank (5) anhand des am Endgerät (12) eingelesenen und
decodierten Codes (10), wobei das Endgerät (12) die Datenbank (5) anhand der aus dem Code (10) gewonnenen Datenbank-ID (17) für das Abrufen des Datensatzes auswählt und an die Datenbank (5) die Modell-ID (16) zusammen mit einer Endgeräte-Identifikation (19) und einer User-Identifikation (20) übermittelt,
wobei eine mit der Datenbank (5) verbundene Authentifizierungseinrichtung (18) die Berechtigung des anfragenden Endgeräts (12) und des das Endgerät (12) benutzenden Users zum Abfragen des zweiten Datensatzes (8) anhand der übermittelten Modell-ID (16) und der übermittelten Endgeräte- und Useridentifikationen (19, 20) überprüft und die bei der Anfrage übermittelte Endgeräte-Identifikation (19) mit einer vorkonfigurierten Liste von berechtigten Endgeräte-Identifikationen abgleicht, wobei der zweite Datensatz (8) von der Datenbank (5) in Abhängigkeit der Berechtigungsprüfung an das Endgerät (12) übermittelt oder nicht übermittelt wird, und
Anzeigen des vereinfachten Modells des Werkstücks (2) auf einer mit dem Endgerät (2) verbundenen Anzeigevorrichtung (11) anhand des abgerufenen und an das Endgerät (12) übermittelten zweiten, vereinfachten Datensatzes (8).

2. Verfahren nach einem der vorhergehenden Ansprüche, wobei als Code (10) ein QR-Code erstellt, an den Fertigungsplatz übermittelt und dort einlesbar bereitgestellt wird.

3. Verfahren nach einem der vorhergehenden Ansprüche, wobei der zweite vereinfachte Datensatz (8) in derselben Datenbank (5) wie der erste Datensatz (7) gespeichert und als Anhang zum und/oder als Teil des ersten Datensatzes abgespeichert wird.

4. Verfahren nach einem der vorhergehenden Ansprüche, wobei der Code (10) zusammen mit dem zweiten, vereinfachten Datensatz (8) in der Datenbank (5) gespeichert wird.

5. Verfahren nach einem der vorhergehenden Ansprüche, wobei das vereinfachte Modell des Werkstücks (2) auf der Anzeigevorrichtung (11, 23, 24) des Endgeräts (12) in Form eines 3D-Modells angezeigt wird, wobei die Perspektive der Anzeige gewendet und/oder gedreht werden kann.

6. Verfahren nach einem der vorhergehenden Ansprüche, wobei das vereinfachte Modell des Werkstücks (2) auf einem mobilen Endgerät (12) insbesondere in Form eines Tablet-Computers (23) und/oder einer Datenbrille (24) angezeigt wird.

7. Vorrichtung zum Bereitstellen einer Werkstückdarstellung an einem Fertigungsplatz (1), mit einer Datenbank (5) zum Speichern eines ersten Datensatzes (7) zum Darstellen eines Originalmodells des Werkstücks (2), einem Datensatzgenerator (26) zum Generieren eines zweiten, gegenüber dem ersten Datensatz (7) vereinfachten Datensatzes (8) zum Darstellen eines vereinfachten Modells des Werkstücks (2) und Speichern des zweiten, vereinfachten Datensatzes (8) in der oder einer anderen Datenbank (5), wobei der zweite Datensatz (8) im Vergleich zum ersten Datensatz (7) ein verringertes Datenvolumen und/oder ein anderes Datenformat aufweist, einem Code-Generator (9) zum Generieren eines Codes (10) zum Identifizieren des an dem Fertigungsplatz (1) zu fertigenden Werkstücks (2), wobei ein Endgerät (12) mit einer Anzeigevorrichtung (11, 23, 24) zum Anzeigen des vereinfachten Modells des Werkstücks (2) eine Einlesevorrichtung (13) zum Einlesen des genannten, in Form eines Code-Aufklebers oder Datenspeichers am Werkstück (2) angebrachten Codes (10), wobei das Endgerät (12) eine Decodiereinrichtung (14) zum Decodieren des Codes (10) und Generieren einer digitalen Modell-ID (16) sowie einer Datenbank-ID (17), die die Datenbank identifiziert, in der der zweite Datensatz abgespeichert ist, aus dem eingelesenen Code (10) aufweist, eine Abrufeinrichtung (28) zum voll- und/oder halbautomatischen Abrufen des zweiten, vereinfachten Datensatzes (8) aus der Datenbank (5) anhand des eingelesenen und decodierten Codes (10), wobei die Abrufeinrichtung (28) des Endgeräts (12) dazu konfiguriert ist, die Datenbank (5), an die die Abfrage gerichtet wird, anhand der genannten Datenbank-ID (17) automatisch auszuwählen und zum Abfragen des Werkstückmodells die genannte Modell-ID (16) zusammen mit einer Endgeräteidentifikation (19) und einer Useridentifikation (20) an die Datenbank (5) zu übermitteln, wobei eine mit der Datenbank (5) verbundene Authentifizierungseinrichtung (18) dazu ausgebildet ist, die Berechtigung des anfragenden Endgeräts (12) und des das Endgerät (12) benutzenden Users zum Abfragen des zweiten Datensatzes (8) anhand der übermittelten Modell-ID (16) und der übermittelten Endgeräte- und Useridentifikationen (19, 20) zu überprüfen und die bei der Anfrage übermittelte Endgeräte-Identifikation (19) mit einer vorkonfigurierten Liste von berechtigten Endgeräte-Identifikationen abzugleichen und den zweiten Datensatz (8) von der Datenbank (5) in Abhängigkeit der Berechtigungsprüfung an das Endgerät (12) zu übermitteln oder nicht zu übermitteln, sowie eine Visualisierungseinrichtung (29) zum Anzeigen des vereinfachten Modells des Werkstücks (2) anhand des abgerufenen und übermittelten zweiten Datensatzes (8) auf der Anzeigevorrichtung (11, 23, 24) aufweist.

8. Vorrichtung nach dem vorhergehenden Anspruch 7, wobei der Code-Generator (9) dazu ausgebildet ist, als Code (10) einen QR-Code zu erstellen, an den Fertigungsplatz zu übermitteln und dort einlesbar bereitzustellen.

9. Vorrichtung nach einem der vorhergehenden Ansprüche 7 bis 8, wobei der zweite vereinfachte Datensatz (8) in derselben Datenbank (5) wie der erste Datensatz (7) gespeichert und als Anhang zum und/oder als Teil des ersten Datensatzes abgespeichert ist.

10. Vorrichtung nach einem der vorhergehenden Ansprüche 7 bis 9, wobei der Code (10) zusammen mit dem zweiten, vereinfachten Datensatz (8) in der Datenbank (5) gespeichert wird.

11. Vorrichtung nach einem der vorhergehenden Ansprüche 7 bis 10, wobei die Visualisierungseinrichtung des Endgeräts (12) zum Anzeigen des vereinfachten Models des Werkstücks (2) auf der Anzeigevorrichtung (11, 23, 24) des Endgeräts (12) in Form eines 3D-Modells, dessen Perspektive wendbar und/oder drehbar ist, konfiguriert ist.

12. Vorrichtung nach dem vorhergehenden Anspruch, wobei die Anzeigevorrichtung (23) als Touch-Screen ausgebildet ist und ein Verdrehen und /oder Wenden der Werkstückdarstellung durch Berühren des Touch-Screen erlaubt.

13. Vorrichtung nach einem der vorhergehenden Ansprüche 7 bis 12, wobei das Endgerät (12) mobil ausgebildet ist, insbesondere in Form eines Tablet-Computers (23).

14. Vorrichtung nach einem der vorhergehenden Ansprüche 7 bis 13, wobei das Endgerät eine Datenbrille (24) zum Anzeigen des vereinfachten Datenmodells im Sinne einer Augmented Reality aufweist, wobei die Datenbrille (24) einen Code-Leser zum Einlesen des Codes (10) aufweist.

15. Vorrichtung nach einem der vorhergehenden Ansprüche 7 bis 14, wobei die Abrufeinrichtung (28), die Decodiereinrichtung (14) und die Visualisierungseinrichtung des Endgeräts (12) jeweils in Form eines Software-Bausteins in dem Endgerät implementiert sind.

## Claims

1. Method for providing a workpiece representation (3) at a production site (1), with the following steps:storing a first data set (7) for representing an original model of the workpiece (2) in a database (5),generating a second data set (8), simplified compared to the first data set (7), for representing a simplified model of the workpiece (2) and storing the second simplified data set (8) in the or another database (5), wherein the second data set (8) in comparison to the first data set (7) comprises a reduced data volume and/or a different data format,providing a code (10) for identifying the workpiece (2) to be manufactured at the production site (1), wherein the code (10) is attached to the workpiece (2) in the form of a code sticker or data storage medium,reading the code (10) attached to the workpiece (2) by a reading device (13) of a terminal device (12),decoding the read code (10) by means of a decoding device (14) provided on the terminal device (12), wherein during the decoding, a model ID (16) and a database ID (17), which identifies the database in which the data set associated with the model ID (16) is stored, are generated from the read code (10),retrieving the second simplified data set (8) by the terminal device (12) from the database (5) on the basis of the code (10) read and decoded at the terminal device (12), wherein the terminal device (12) selects the database (5) for the retrieval of the data set on the basis of the database ID (17) obtained from the code (10) and transmits to the database (5) the model ID (16) together with a terminal device identification (19) and a user identification (20),wherein an authentication device (18) connected to the database (5) verifies the authorization of the requesting terminal device (12) and of the user using the terminal device (12) to query the second data set (8) on the basis of the transmitted model ID (16) and the transmitted terminal device and user identifications (19, 20) and matches the terminal device identification (19) transmitted with the request against a preconfigured list of authorized terminal device identifications, wherein the second data set (8) is transmitted or is not transmitted from the database (5) to the terminal device (12) depending on the authorization check, anddisplaying the simplified model of the workpiece (2) on a display device (11) connected to the terminal device (2) on the basis of the retrieved and transmitted to the terminal device (12) second, simplified data set (8).

2. Method according to any one of the preceding claims, wherein a QR code is created as the code (10), transmitted to the production site and provided there in a readable manner.

3. Method according to any one of the preceding claims, wherein the second simplified data set (8) is stored in the same database (5) as the first data set (7) and is stored as an attachment to and/or as part of the first data set.

4. Method according to any one of the preceding claims, wherein the code (10) is stored together with the second, simplified data set (8) in the database (5).

5. Method according to any one of the preceding claims, wherein the simplified model of the workpiece (2) is displayed on the display device (11, 23, 24) of the terminal device (12) in the form of a 3D model, wherein the perspective of the display can be turned and/or rotated.

6. Method according to any one of the preceding claims, wherein the simplified model of the workpiece (2) is displayed on a mobile terminal device (12), in particular in the form of a tablet computer (23) and/or data glasses (24).

7. Apparatus for providing a workpiece representation at a production site (1), with a database (5) for storing a first data set (7) for representing an original model of the workpiece (2), a data set generator (26) for generating a second data set (8), simplified compared to the first data set (7), for representing a simplified model of the workpiece (2) and storing the second, simplified data set (8) in the or another database (5), wherein the second data set (8) in comparison to the first data set (7) comprises a reduced data volume and/or a different data format, a code generator (9) for generating a code (10) for identifying the workpiece (2) to be manufactured at the production site (1), wherein a terminal device (12) with a display device (11, 23, 24) for displaying the simplified model of the workpiece (2) has a reading device (13) for reading the said code (10) attached to the workpiece (2) in the form of a code sticker or data storage medium, wherein the terminal device (12) comprises a decoding device (14) for decoding the code (10) and generating a digital model ID (16) as well as a database ID (17), which identifies the database in which the second data set is stored, from the read code (10), a retrieval device (28) for fully and/or semi-automatically retrieving the second, simplified data set (8) from the database (5) on the basis of the read and decoded code (10), wherein the retrieval device (28) of the terminal device (12) is configured to automatically select the database (5) to which the query is directed on the basis of the said database ID (17) and to transmit the said model ID (16) together with a terminal device identification (19) and a user identification (20) to the database (5) for querying the workpiece model, wherein an authentication device (18) connected to the database (5) is configured to verify the authorization of the requesting terminal device (12) and of the user using the terminal device (12) to query the second data set (8) on the basis of the transmitted model ID (16) and the transmitted terminal device and user identifications (19, 20) and to match the terminal device identification (19) transmitted with the request against a preconfigured list of authorized terminal device identifications and to transmit or not to transmit the second data set (8) from the database (5) to the terminal device (12) depending on the authorization check, and also comprises a visualization device (29) for displaying the simplified model of the workpiece (2) on the basis of the retrieved and transmitted second data set (8) on the display device (11, 23, 24).

8. Apparatus according to the preceding claim 7, wherein the code generator (9) is configured to create a QR code as the code (10), to transmit it to the production site and to provide it there in a readable manner.

9. Apparatus according to any one of the preceding claims 7 to 8, wherein the second simplified data set (8) is stored in the same database (5) as the first data set (7) and is stored as an attachment to and/or as part of the first data set.

10. Apparatus according to any one of the preceding claims 7 to 9, wherein the code (10) is stored together with the second, simplified data set (8) in the database (5).

11. Apparatus according to any one of the preceding claims 7 to 10, wherein the visualization device of the terminal device (12) is configured for displaying the simplified model of the workpiece (2) on the display device (11, 23, 24) of the terminal device (12) in the form of a 3D model, the perspective of which is turnable and/or rotatable.

12. Apparatus according to the preceding claim, wherein the display device (23) is configured as a touch screen and permits a rotating and/or turning of the workpiece representation by touching the touch screen.

13. Apparatus according to any one of the preceding claims 7 to 12, wherein the terminal device (12) is configured to be mobile, in particular in the form of a tablet computer (23).

14. Apparatus according to any one of the preceding claims 7 to 13, wherein the terminal device comprises data glasses (24) for displaying the simplified data model in the sense of an Augmented Reality, wherein the data glasses (24) comprise a code reader for reading the code (10).

15. Apparatus according to any one of the preceding claims 7 to 14, wherein the retrieval device (28), the decoding device (14) and the visualization device of the terminal device (12) are each implemented in the form of a software module in the terminal device.

## Revendications

1. Procédé pour la mise à disposition d'une représentation de pièce (3) à un poste de fabrication (1), avec les étapes suivantes :stockage d'un premier jeu de données (7) pour représenter un modèle original de la pièce (2) dans une base de données (5),génération d'un second jeu de données (8), simplifié par rapport au premier jeu de données (7), pour représenter un modèle simplifié de la pièce (2) et stockage du second jeu de données simplifié (8) dans la base de données ou une autre base de données (5), dans lequel le second jeu de données (8) par comparaison au premier jeu de données (7) présente un volume de données réduit et/ou un format de données différent,mise à disposition d'un code (10) pour identifier la pièce (2) à fabriquer au poste de fabrication (1), dans lequel le code (10) est apposé sur la pièce (2) sous la forme d'un autocollant de code ou d'un support de stockage de données,lecture du code (10) apposé sur la pièce (2) par un dispositif de lecture (13) d'un terminal (12),décodage du code lu (10) au moyen d'un dispositif de décodage (14) prévu sur le terminal (12), dans lequel, lors du décodage, un ID de modèle (16) et un ID de base de données (17), qui identifie la base de données dans laquelle le jeu de données associé à l'ID de modèle (16) est stocké, sont générés à partir du code lu (10),récupération du second jeu de données simplifié (8) par le terminal (12) depuis la base de données (5) sur la base du code (10) lu et décodé au niveau du terminal (12), dans lequel le terminal (12) sélectionne la base de données (5) pour la récupération du jeu de données sur la base de l'ID de base de données (17) obtenu à partir du code (10) et transmet à la base de données (5) l'ID de modèle (16) conjointement avec une identification de terminal (19) et une identification d'utilisateur (20),dans lequel un dispositif d'authentification (18) connecté à la base de données (5) vérifie l'autorisation du terminal demandeur (12) et de l'utilisateur utilisant le terminal (12) à interroger le second jeu de données (8) sur la base de l'ID de modèle transmis (16) et des identifications de terminal et d'utilisateur transmises (19, 20) et compare l'identification de terminal (19) transmise avec la demande à une liste préconfigurée d'identifications de terminal autorisées, dans lequel le second jeu de données (8) est transmis ou n'est pas transmis de la base de données (5) au terminal (12) en fonction du contrôle d'autorisation, etaffichage du modèle simplifié de la pièce (2) sur un dispositif d'affichage (11) connecté au terminal (2) sur la base du second jeu de données simplifié (8) récupéré et transmis au terminal (12).

2. Procédé selon l'une quelconque des revendications précédentes, dans lequel un code QR est créé en tant que code (10), transmis au poste de fabrication et mis à disposition de manière lisible à cet endroit.

3. Procédé selon l'une quelconque des revendications précédentes, dans lequel le second jeu de données simplifié (8) est stocké dans la même base de données (5) que le premier jeu de données (7) et est stocké en tant que pièce jointe et/ou en tant que partie du premier jeu de données.

4. Procédé selon l'une quelconque des revendications précédentes, dans lequel le code (10) est stocké conjointement avec le second jeu de données simplifié (8) dans la base de données (5).

5. Procédé selon l'une quelconque des revendications précédentes, dans lequel le modèle simplifié de la pièce (2) est affiché sur le dispositif d'affichage (11, 23, 24) du terminal (12) sous la forme d'un modèle 3D, dans lequel la perspective de l'affichage peut être tournée et/ou pivotée.

6. Procédé selon l'une quelconque des revendications précédentes, dans lequel le modèle simplifié de la pièce (2) est affiché sur un terminal mobile (12), en particulier sous la forme d'une tablette tactile (23) et/ou de lunettes de données (24).

7. Dispositif pour la mise à disposition d'une représentation de pièce à un poste de fabrication (1), avec une base de données (5) pour stocker un premier jeu de données (7) pour représenter un modèle original de la pièce (2), un générateur de jeu de données (26) pour générer un second jeu de données (8), simplifié par rapport au premier jeu de données (7), pour représenter un modèle simplifié de la pièce (2) et stocker le second jeu de données simplifié (8) dans la base de données ou une autre base de données (5), dans lequel le second jeu de données (8) par comparaison au premier jeu de données (7) présente un volume de données réduit et/ou un format de données différent, un générateur de code (9) pour générer un code (10) pour identifier la pièce (2) à fabriquer au poste de fabrication (1), dans lequel un terminal (12) avec un dispositif d'affichage (11, 23, 24) pour afficher le modèle simplifié de la pièce (2) a un dispositif de lecture (13) pour lire ledit code (10) apposé sur la pièce (2) sous la forme d'un autocollant de code ou d'un support de stockage de données, dans lequel le terminal (12) comprend un dispositif de décodage (14) pour décoder le code (10) et générer un ID de modèle numérique (16) ainsi qu'un ID de base de données (17), qui identifie la base de données dans laquelle le second jeu de données est stocké, à partir du code lu (10), un dispositif de récupération (28) pour récupérer de manière entièrement et/ou semi-automatique le second jeu de données simplifié (8) depuis la base de données (5) sur la base du code lu et décodé (10), dans lequel le dispositif de récupération (28) du terminal (12) est configuré pour sélectionner automatiquement la base de données (5) à laquelle la demande est adressée sur la base dudit ID de base de données (17) et pour transmettre ledit ID de modèle (16) conjointement avec une identification de terminal (19) et une identification d'utilisateur (20) à la base de données (5) pour interroger le modèle de pièce, dans lequel un dispositif d'authentification (18) connecté à la base de données (5) est configuré pour vérifier l'autorisation du terminal demandeur (12) et de l'utilisateur utilisant le terminal (12) à interroger le second jeu de données (8) sur la base de l'ID de modèle transmis (16) et des identifications de terminal et d'utilisateur transmises (19, 20) et pour comparer l'identification de terminal (19) transmise avec la demande à une liste préconfigurée d'identifications de terminal autorisées et pour transmettre ou ne pas transmettre le second jeu de données (8) de la base de données (5) au terminal (12) en fonction du contrôle d'autorisation, et comprenant en outre un dispositif de visualisation (29) pour afficher le modèle simplifié de la pièce (2) sur la base du second jeu de données (8) récupéré et transmis sur le dispositif d'affichage (11, 23, 24).

8. Dispositif selon la revendication précédente 7, dans lequel le générateur de code (9) est configuré pour créer un code QR en tant que code (10), pour le transmettre au poste de fabrication et pour le mettre à disposition de manière lisible à cet endroit.

9. Dispositif selon l'une quelconque des revendications précédentes 7 à 8, dans lequel le second jeu de données simplifié (8) est stocké dans la même base de données (5) que le premier jeu de données (7) et est stocké en tant que pièce jointe et/ou en tant que partie du premier jeu de données.

10. Dispositif selon l'une quelconque des revendications précédentes 7 à 9, dans lequel le code (10) est stocké conjointement avec le second jeu de données simplifié (8) dans la base de données (5).

11. Dispositif selon l'une quelconque des revendications précédentes 7 à 10, dans lequel le dispositif de visualisation du terminal (12) est configuré pour afficher le modèle simplifié de la pièce (2) sur le dispositif d'affichage (11, 23, 24) du terminal (12) sous la forme d'un modèle 3D, dont la perspective peut être tournée et/ou pivotée.

12. Dispositif selon la revendication précédente, dans lequel le dispositif d'affichage (23) est configuré en tant qu'écran tactile et permet une rotation et/ou un retournement de la représentation de pièce par le toucher de l'écran tactile.

13. Dispositif selon l'une quelconque des revendications précédentes 7 à 12, dans lequel le terminal (12) est configuré pour être mobile, en particulier sous la forme d'une tablette tactile (23).

14. Dispositif selon l'une quelconque des revendications précédentes 7 à 13, dans lequel le terminal comprend des lunettes de données (24) pour afficher le modèle de données simplifié au sens d'une réalité augmentée, dans lequel les lunettes de données (24) comprennent un lecteur de code pour lire le code (10).

15. Dispositif selon l'une quelconque des revendications précédentes 7 à 14, dans lequel le dispositif de récupération (28), le dispositif de décodage (14) et le dispositif de visualisation du terminal (12) sont respectivement mis en œuvre sous la forme d'un module logiciel dans le terminal.
